# EUROPEAN PATENT APPLICATION

(11) **EP 4 068 692 A1**
(43) Date of publication of application: **05.10.2022**
(21) Application number: 20893042.0
(22) Date of filing: 13.11.2020
(51) Int. Cl.: H04L 12/24

(54) **BLOCKCHAIN SYSTEM, PROGRAM, AND NETWORK CONNECTION DEVICE**

(30) Priority: 26.11.2019 JP 2019213350
(71) Applicant: Daikin Industries, Ltd., Osaka-shi, Osaka 530-8323 (JP)
(72) Inventor: FUJIMOTO, Shinichirou, Osaka-shi, Osaka 530-8323 (JP)
(74) Representative: Goddar, Heinz J.
(86) International application number: PCT/JP2020/042394
(87) International publication number: WO 2021/106621

(57) **Abstract**

A block chain system includes a network connection apparatus and a plurality of nodes, and includes a node information managing unit, a network connection apparatus information managing unit, a block chain network information managing unit configured to manage information related to a block chain network, a block chain node updating unit configured to update block chain nodes in response to a change in information related to the plurality of nodes, a propagating unit configured to propagate, to the block chain nodes, information that is input in the block chain network for recording, and a recording unit configured to record the information in the block chain network, in a case where agreement is achieved with respect to the information that is input.

## Description

### Technical Field

The present disclosure relates to a block chain system, a program, and a network connection apparatus that update block chain nodes.

### Background Art

If vehicle information obtained by a vehicle is managed only by a center, for example, it is difficult to prevent the vehicle information from being illegally rewritten by a third person, or detect or prevent manipulation caused by an internal illegal act at the center. Therefore, a technique, in which multiple nodes manage the vehicle information in a distributed ledger, is known (see, for example, Patent Document 1).

### [Related Art Document]

### [Patent Document]

[Patent Document 1] Japanese Laid-open Patent Publication No. 2019-23823

### Summary of the Invention

### Problem to be Solved by the Present Disclosure

Patent Document 1 discloses that registration to a node list where appropriate ledger management nodes of a ledger management system are registered or deletion from the node list is performed offline, but does not disclose updating block chain nodes in response to a change in information related to multiple nodes.

It is an object of the present disclosure to provide a block chain system, a program, and a network connection apparatus that can update block chain nodes in response to a change in information related to multiple nodes.

### Means for Solving Problem

A block chain system according to the present disclosure is a block chain system including a network connection apparatus communicatively connecting networks and a plurality of nodes connected to a network under the network connection apparatus, and includes a node information managing unit configured to manage information related to the plurality of nodes connected to the network under the network connection apparatus, a network connection apparatus information managing unit configured to manage information related to the network connection apparatus, the plurality of nodes being connected to the network under the network connection apparatus, a block chain network information managing unit configured to manage information related to a block chain network in which block chain nodes include at least a part of the plurality of nodes and the network connection apparatus, a block chain node updating unit configured to update the block chain nodes in response to a change in the information related to the plurality of nodes managed by the node information managing unit, a propagating unit configured to propagate, to the block chain nodes, information that is input in the block chain network for recording, and a recording unit configured to record the information that is input, in the block chain network, in a case where agreement is achieved in the block chain nodes with respect to the information that is input.

According to the present disclosure, the block chain nodes can be updated in response to a change in the information related to the plurality of nodes.

The block chain node updating unit may be characterized in performing addition to the block chain nodes by referring to the information related to the network connection apparatus managed by the network connection apparatus information managing unit, in a case where the number of the block chain nodes is less than or equal to a predetermined number by referring to the information related to the block chain network managed by the block chain network information managing unit.

According to the present disclosure, a block chain node can be added to the block chain network if the number of the block chain nodes is less than or equal to the predetermined number.

The block chain node updating unit may be characterized in deleting a part of the block chain nodes from the block chain network, if the number of the block chain nodes is not less than or equal to a predetermined number, by referring to the information related to the block chain network managed by the block chain network information managing unit, in a case where the part of the block chain nodes is deleted.

According to the present disclosure, a block chain node can be deleted as long as the number of the block chain nodes is not less than or equal to the predetermined number.

The block chain node updating unit may be characterized in selecting the node and the network connection apparatus to be added as the block chain node or to be deleted, based on resource statuses of the nodes connected to the network under the network connection apparatus and the network connection apparatus.

According to the present disclosure, a node and a network connection apparatus to be added as the block chain node or deleted can be selected based on the resource statuses of the nodes and the network connection apparatus.

The block chain node updating unit may be further characterized in selecting the node and the network connection apparatus to be added as the block chain node or to be deleted, in consideration of a communication cost.

According to the present disclosure, a node and a network connection apparatus to be added as the block chain node or deleted can be selected in consideration of the communication cost.

The node may be characterized in that the node is equipment connected to a network under a network connection apparatus of a property.

According to the present disclosure, the equipment connected to the network under the network connection apparatus of the property can be the node.

A program of the present disclosure causes a network connection apparatus communicatively connecting networks to function as an apparatus including a node information managing unit configured to manage information related to a plurality of nodes connected to a network under the network connection apparatus, a network connection apparatus information managing unit configured to manage information related to another network connection apparatus, a plurality of nodes being connected to a network under the another network connection apparatus, a block chain network information managing unit configured to manage information related to a block chain network configured by at least a part of the nodes managed by the node information managing unit, the network connection apparatus, and the nodes managed by the network connection apparatus information managing unit, and a block chain node updating unit configured to update the block chain nodes in response to a change in the information related to the plurality of nodes managed by the node information managing unit.

According to the present disclosure, the block chain nodes can be updated in response to a change in the information related to the plurality of nodes.

The network connection apparatus according to the present disclosure is a network connection apparatus that communicatively connects networks, and includes a node information managing unit configured to manage information related to a plurality of nodes connected to a network under the network connection apparatus, a network connection apparatus information managing unit configured to manage information related to another network connection apparatus, a plurality of nodes being connected to a network under the another network connection apparatus, a block chain network information managing unit configured to manage information related to a block chain network configured by at least a part of the nodes managed by the node information managing unit, the network connection apparatus, and the nodes managed by the network connection apparatus information managing unit, and a block chain node updating unit configured to update the block chain nodes in response to a change in information related to the plurality of nodes managed by the node information managing unit.

According to the present disclosure, the block chain node can be updated in response to a change in the information related to the plurality of nodes.

### Brief Description of the Drawings

FIG. 1 is a configuration diagram of an example of a block chain system according to the present embodiment.
FIG. 2 is a hardware configuration diagram of an example of a computer according to the present embodiment.
FIG. 3 is a functional block diagram of an example of a cloud server according to the present embodiment.
FIG. 4 is a functional block diagram of an example of a GW according to the present embodiment.
FIG. 5 is a functional block diagram of an example of a node according to the present embodiment.
FIG. 6 is a configuration diagram of an example of GW information.
FIG. 7 is a configuration diagram of an example of node information.
FIG. 8 is a configuration diagram of an example of block chain network information.
FIG. 9 is a flowchart of an example of a process of a cloud server that receives a change in the node information.
FIG. 10 is a flowchart of an example of a process of updating block chain nodes.
FIG. 11 is a configuration diagram of another example of the block chain system according to the present embodiment.
FIG. 12 is a functional block diagram of an example of a GW according to a second embodiment.
FIG. 13 is a configuration diagram of an example of the node information.
FIG. 14 is a configuration diagram of an example of the block chain network information.

### Embodiment for Carrying Out the Invention

Next, embodiments of the present invention will be described in detail.

### [First embodiment]

In the present embodiment, an example of property equipment will be described as an example of multiple nodes connected to a network. The property equipment includes various equipment and devices other than personal computers (PCs), such as air conditioners, monitoring devices, security devices, and remote control devices for operating equipment.

### <System configuration>

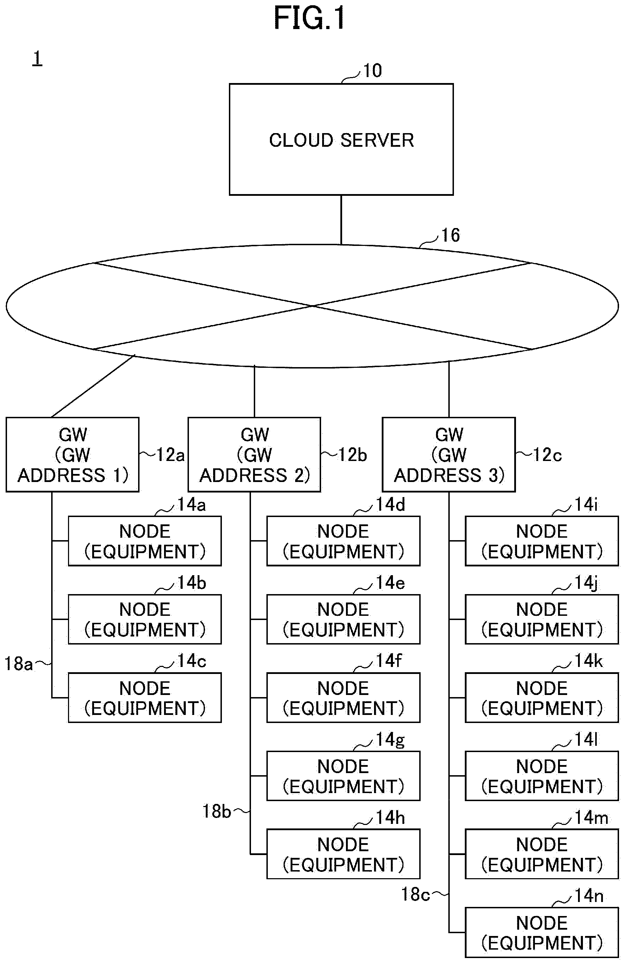

FIG. 1 is a configuration diagram of an example of a block chain system according to the present embodiment. In a block chain system 1, a cloud server 10, GWs 12a to 12c, and nodes 14a to 14n are connected via networks 16 and 18a to 18c, such as the Internet and LANs.

The cloud server 10 in FIG. 1 is an example and an information processing system implemented by one or more computers may be used. The GWs 12a to 12c are examples of a network connection apparatus communicatively connecting networks of edges, fogs, clouds, and the like, and are gateways. Hereinafter, when any of the GWs 12a to 12c is indicated, the GWs 12a to 12c are collectively referred to as the GWs 12.

The nodes 14a to 14n are equipment of the property that is communicatively connected to the networks 18a to 18c under the GWs 12. For example, in FIG. 1, the nodes 14a to 14c are communicatively connected to the network 18a under the GW 12a. The nodes 14d to 14h are communicatively connected to the network 18b under the GW 12b. The nodes 14i to 14n are communicatively connected to the network 18c under the GW 12c. Hereinafter, when any of the nodes 14a to 14n is indicated, the nodes 14a to 14n are collectively referred to as the nodes 14. When any of the networks 18a to 18c is indicated, the networks 18a to 18c are collectively referred to as the networks 18.

In the block chain system 1 according to the present embodiment, a change (addition, deletion, setting change, and the like of the node 14) in information related to the nodes 14, which are the equipment of the property, is recorded in a block chain network configured by multiple nodes 14. Here, the multiple nodes 14 included in the block chain network are updated as described below. Additionally, the block chain network may be configured by multiple nodes 14 and the GW 12, and the multiple nodes 14 and the GW 12 included in the block chain network may be updated, as described below.

It is apparent that the block chain system 1 of FIG. 1 is an example, and there are various system configurations depending on the application and purpose.

### <Hardware configuration>

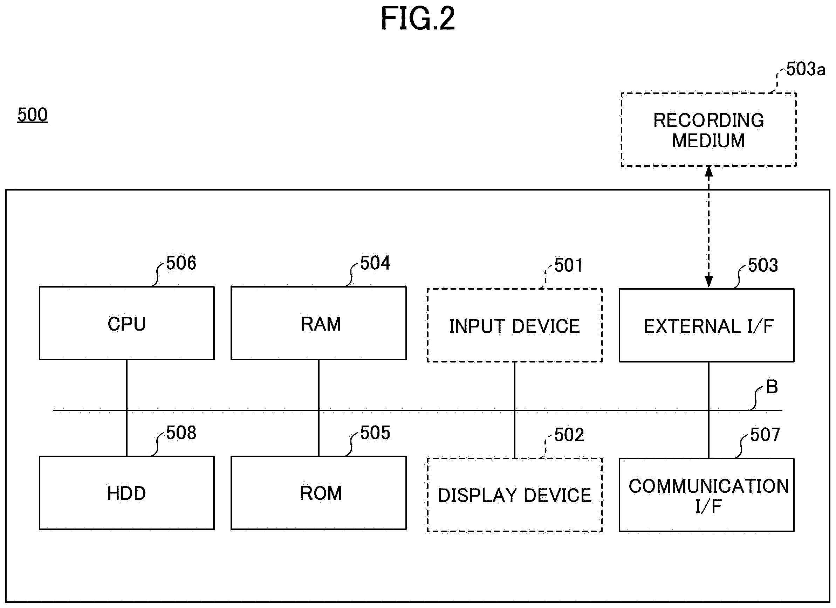

The cloud server 10 and the GW 12 of FIG. 1 are implemented by computers 500 each having a hardware configuration illustrated in FIG. 2, for example. Here, the hardware configuration of the node 14 is not described, but it is assumed that the node includes a resource that can perform information processing.

FIG. 2 is a hardware configuration diagram of an example of the computer according to the present embodiment. The computer 500 of FIG. 2 includes an input device 501, an output device 502, an external I/F 503, a RAM 504, a ROM 505, a CPU 506, a communication I/F 507, an HDD 508, and the like, each of which is interconnected by a bus B. Here, the input device 501 and the output device 502 may be connected and utilized when necessary.

The input device 501 may be a touch panel, an operation key or button, a keyboard, a mouse, or the like that is used by a user to input various signals. The output device 502 includes a display, such as a liquid crystal display or an organic EL display for displaying a screen, a speaker for outputting sound data, such as voice or music, and the like. The communication I/F 507 is an interface that connects the computer 500 to the network 16 or 18. The computer 500 can perform data communication via the communication I/F 507.

Additionally, the HDD 508 is an example of a non-volatile storage device that stores programs and data. The stored programs and data include an OS, which is basic software that entirely controls the computer 500, an application that provides various functions on the OS, and the like.

Here, the computer 500 may use a drive device (for example, a solid state drive (SSD)) that uses a flash memory as a storage medium, instead of the HDD 508.

The external I/F 503 is an interface with an external device. The external device is a recording medium 503a or the like. The computer 500 can read data from and/or write data to the recording medium 503a via the external I/F 503. The recording medium 503a may be a flexible disk, a CD, a DVD, an SD memory card, a USB memory, or the like.

The ROM 505 is an example of a non-volatile semiconductor memory (a storage device) that can hold programs and data even when the power is turned off. The ROM 505 stores programs and data such as BIOS that is executed when the computer 500 starts, OS settings, and network settings. The RAM 504 is an example of a volatile semiconductor memory (a storage device) that temporarily holds programs and data.

The CPU 506 is an arithmetic device that achieves control and functions of the entire computer 500 by reading programs and data from the storage device, such as the ROM 505 or the HDD 508, to the RAM 504 and performing processing (including processing for generating images or sound output to the output device 502).

The cloud server 10, the GW 12, and the node 14 according to the present embodiment can perform various processes as described below by executing programs by utilizing the resource that can perform information processing as described above.

### <Software configuration>

### «Functional block»

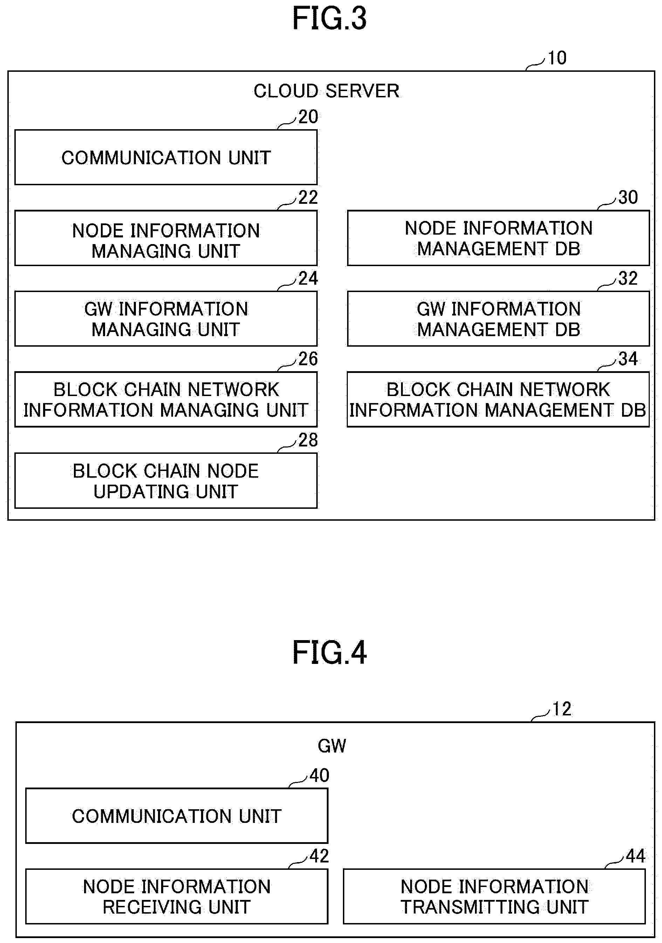

Functional blocks of the cloud server 10, the GW 12, and the node 14 of the block chain system 1 according to the present embodiment will be described. FIG. 3 is a functional block diagram of an example of the cloud server according to the present embodiment. The cloud server 10 executes programs to achieve a communication unit 20, a node information managing unit 22, a GW information managing unit 24, a block chain network information managing unit 26, a block chain node updating unit 28, a node information management DB 30, a GW information management DB 32, and a block chain network information management DB 34.

The communication unit 20 communicates via the network 16. The node information managing unit 22 manages node information described below. The GW information managing unit 24 manages GW information described below. The block chain network information managing unit 26 manages block chain network information described below.

When the block chain network includes multiple nodes 14, the block chain node updating unit 28 updates, as described below, the block chain nodes, which are the multiple nodes 14 included in the block chain network. When the block chain network includes multiple nodes 14 and GWs 12, the block chain node updating unit 28 updates, as described below, the block chain nodes, which are the multiple nodes 14 and GWs 12 included in the block chain network.

The node information management DB 30 records node information as described below. The GW information management DB 32 records GW information as described below. The block chain network information management DB 34 records block chain network information as described below.

FIG. 4 is a functional block diagram illustrating an example of the GW according to the present embodiment. The GW 12 executes a program to implement a communication unit 40, a node information receiving unit 42, and a node information transmitting unit 44.

The communication unit 40 communicates via the network 16 or 18. The node information receiving unit 42 receives the node information (information related to the node 14) from the node 14. When the block chain network includes the multiple nodes 14, the node information transmitting unit 44 transmits the node information received by the node information receiving unit 42 to the cloud server 10.

Here, when the block chain network includes the multiple nodes 14 and GWs 12, the GW 12 includes functional blocks corresponding to a block chain network information receiving unit 62, a block chain network information management DB 64, and a transaction processing unit 68, which will be described below, in addition to the configuration in FIG. 4.

When the block chain network includes the multiple nodes 14 and GWs 12, the node information transmitting unit 44 adds its own information, such as resource status information, to the node information received by the node information receiving unit 42 and transmits the information to the cloud server 10.

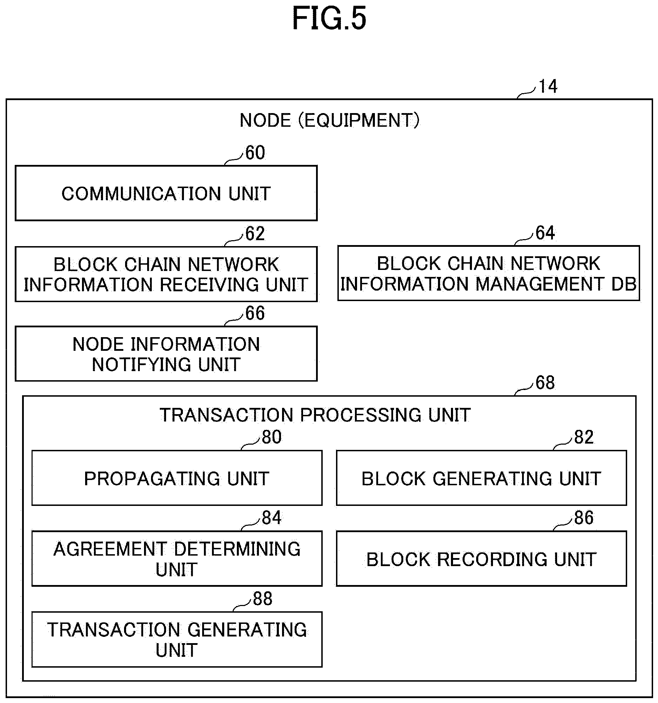

FIG. 5 is a functional block diagram of an example of the node according to the present embodiment. The node 14 executes a program to implement a communication unit 60, a block chain network information receiving unit 62, a block chain network information management DB 64, a node information notifying unit 66, and a transaction processing unit 68. The transaction processing unit 68 includes a propagating unit 80, a block generating unit 82, an agreement determining unit 84, a block recording unit 86, and a transaction generating unit 88.

The communication unit 60 communicates via the network 18. The block chain network information receiving unit 62 receives block chain network information described below. The block chain network information management DB 64 records the block chain network information described below that is received by the block chain network information receiving unit 62. The node information notifying unit 66 notifies the cloud server 10 of changed node information via the GW 12.

The transaction processing unit 68 performs a process related to a transaction. The propagating unit 80 propagates, to the block chain nodes, a transaction that is input into the block chain network to record information related to the changed node 14 (addition, deletion, setting change, and the like of the node 14). The block generating unit 82 generates a block according to the block chain technique. The agreement determining unit 84 performs a process for an agreement according to the agreement rules of the block chain technology that is preset. The block recording unit 86 records the agreed block in the block chain network.

The transaction generating unit 88 generates a transaction for the information related to the changed node 14 (addition, deletion, setting change, and the like of the node 14) and, by inputting the transaction into the block chain network, propagates the transaction to the block chain nodes and causes the information to be recorded in the block chain.

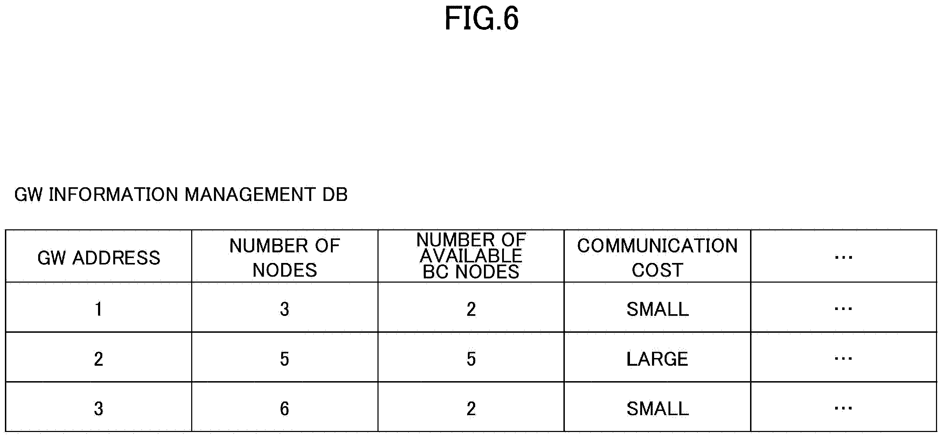

The GW information recorded in the GW information management DB 32 of the cloud server 10 is configured, for example, as illustrated in FIG. 6. FIG. 6 is a configuration diagram of an example of the GW information. As illustrated in FIG. 6, the GW information includes a GW address, the number of the nodes, the number of the available BC nodes, and a communication cost, as items.

The GW address is an example of identification information of the GW 12. The number of nodes is the number of the nodes 14 connected to the network 18 under the GW 12. The number of the available BC nodes is the number of the nodes 14 that are available as block chain nodes among the nodes 14 connected to the network 18 under the GW 12. The communication cost is a cost related to the communication of the nodes 14 connected to the network 18 under the GW 12.

As described, the GW information manages the number of the nodes 14 connected to the network 18 under the GW 12 (the network 18 controlled by the GW 12), the number of the nodes 14 that are available as the block chain nodes, and the communication cost.

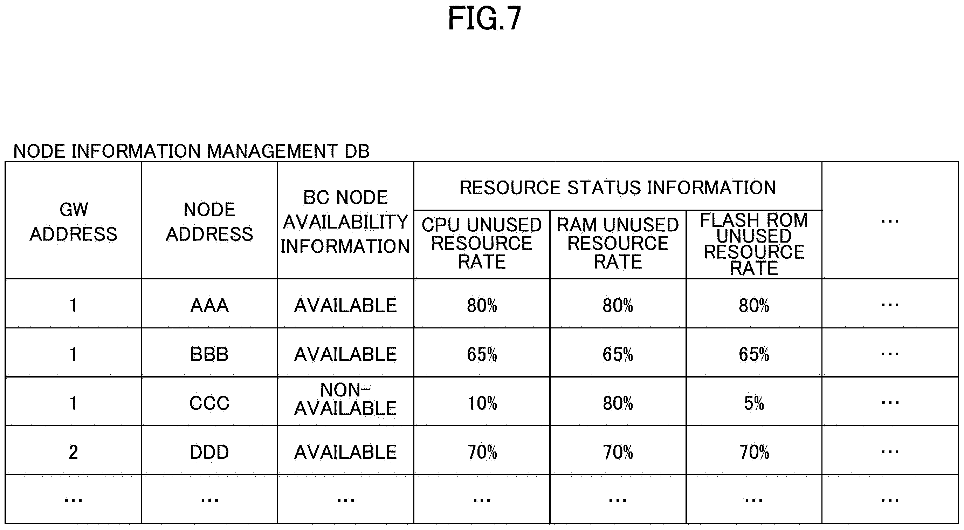

The node information recorded in the node information management DB 30 of the cloud server 10 is configured, for example, as illustrated in FIG. 7. FIG. 7 is a configuration diagram of an example of the node information. The node information illustrated in FIG. 7 includes the GW address, a node address, BC node availability information, and resource status information, as items.

The GW address is an example of the identification information of the GW 12. The node address is an example of identification information of the node 14. The BC node availability information is an example of information indicating whether the node can be used as the block chain node. The resource status information is an example of information indicating the unused resource rate of resources (CPU, RAM, FLASH (registered trademark), and the like) of the node 14.

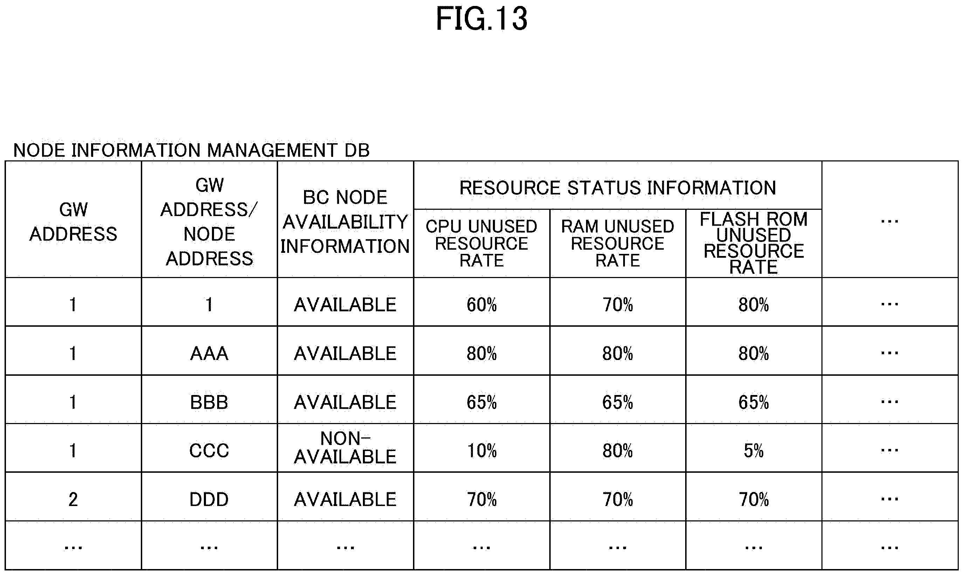

As described above, the node information manages the BC node availability information and the resource status information for each node 14 connected to the network 18 under the GW 12. The node information illustrated in FIG. 7 is an example in which the block chain network includes the multiple nodes 14. The node information, used in a case in which the block chain network includes the multiple nodes 14 and GWs 12, is illustrated, for example, in FIG. 13.

FIG. 13 is a configuration diagram of an example of the node information. The node information illustrated in FIG. 13 is an example in which the block chain node includes the multiple nodes 14 and GWs 12, and thus the item "NODE ADDRESS" of the node information illustrated in FIG. 7 is replaced with an item "GW ADDRESS/NODE ADDRESS".

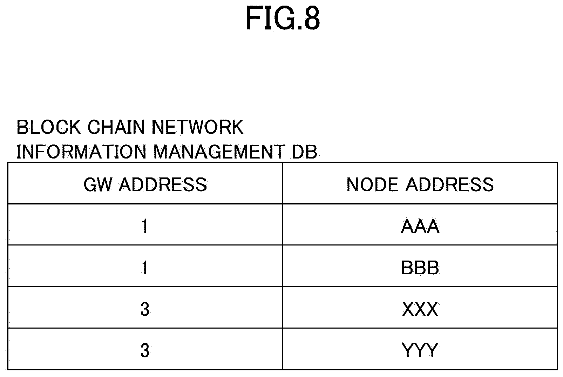

The block chain network information recorded in the block chain network information management DB 34 of the cloud server 10 is configured, for example, as illustrated in FIG. 8. FIG. 8 is a configuration diagram of an example of the block chain network information. The block chain network information in FIG. 8 includes the GW address and the node address, as items. For example, the example of FIG. 8 indicates block chain network information including two nodes 14 connected to the network 18 under the GW address "1" and two nodes 14 connected to the network 18 under the GW address "3".

As described, the block chain network information can be managed when the block chain network includes the nodes 14 connected to the network or networks 18 under the one or more GWs 12.

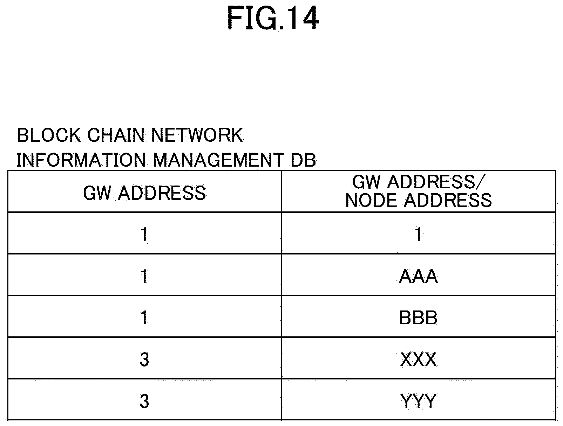

The block chain network information illustrated in FIG. 8 is an example in which the block chain network includes the multiple nodes 14. The block chain network information, used in a case in which the block chain network includes the multiple nodes 14 and GWs 12, is illustrated, for example, in FIG. 14.

FIG. 14 is a configuration diagram of an example of the block chain network information. The block chain network information illustrated in FIG. 14 is an example in which the block chain nodes include the multiple nodes 14 and GWs 12, and thus the item "NODE ADDRESS" of the block chain network information illustrated in FIG. 8 is replaced with an item "GW ADDRESS/NODE ADDRESS".

### <Process>

In the block chain system 1 according to the present embodiment, the block chain network information as illustrated in FIG. 8 or FIG. 14, which is managed by the cloud server 10, is transmitted to the block chain node. The block chain node that receives the block chain network information can recognize other block chain nodes participating in the same block chain network by referring to the block chain network information illustrated in FIG. 8 or FIG. 14.

The block chain system 1 is provided with the GW 12, for example, for each property. For example, in the block chain system 1 of FIG. 1, the GWs 12a to 12c may be provided on different properties. In this case, the networks 18a to 18c under the GWs 12a to 12c are closed networks within respective properties. The closed network 18 of each property is communicatively connected to the closed network 18 of another property via the GW 12.

At the start of the operation of the block chain system 1, the administrator or the like sets the GW information of FIG. 6, the node information of FIG. 7 or 13, and the block chain network information of FIG. 8 or 14. When the GW information of FIG. 6, the node information of FIG. 7 or 13, and the block chain network information of FIG. 8 or 14 are set, the block chain system 1 according to the present embodiment starts to record the information related to the changed node 14 (addition, deletion, setting change, and the like of the node 14) by the block chain network.

When the addition or deletion of the node 14 to the closed network 18 or the setting change to the node 14 occurs after the recording performed by the block chain network is started, the node 14 notifies the cloud server 10 of the change in the node information via the GW 12.

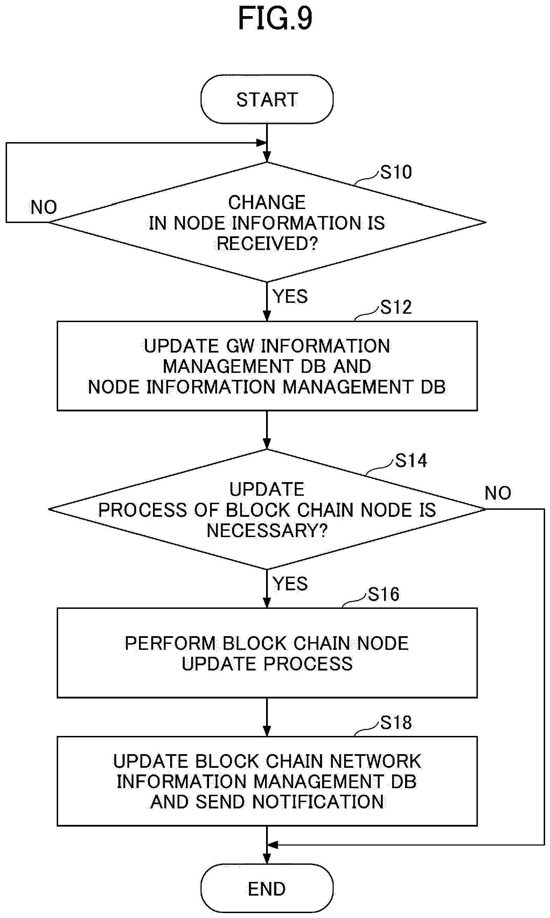

FIG. 9 is a flowchart of an example of a process of the cloud server that receives the change in the node information. When the communication unit 20 of the cloud server 10 receives the change in the node information from the GW 12 in step S10, the communication unit 20 transmits the node information to the node information managing unit 22.

In step S12, the node information managing unit 22 that receives the change in the node information updates the node information recorded in the node information management DB 30 to reflect the change in the node information. When the GW information is changed due to the change in the node information, the GW information managing unit 24 updates the GW information recorded in the GW information management DB 32.

In step S14, the block chain node updating unit 28 determines whether a block chain node updating process is necessary.

When determining that the block chain node updating process is necessary, the block chain node updating unit 28 performs processing from step S16. When determining that the block chain node updating process is not necessary, the block chain node updating unit 28 skips the processing from step S16.

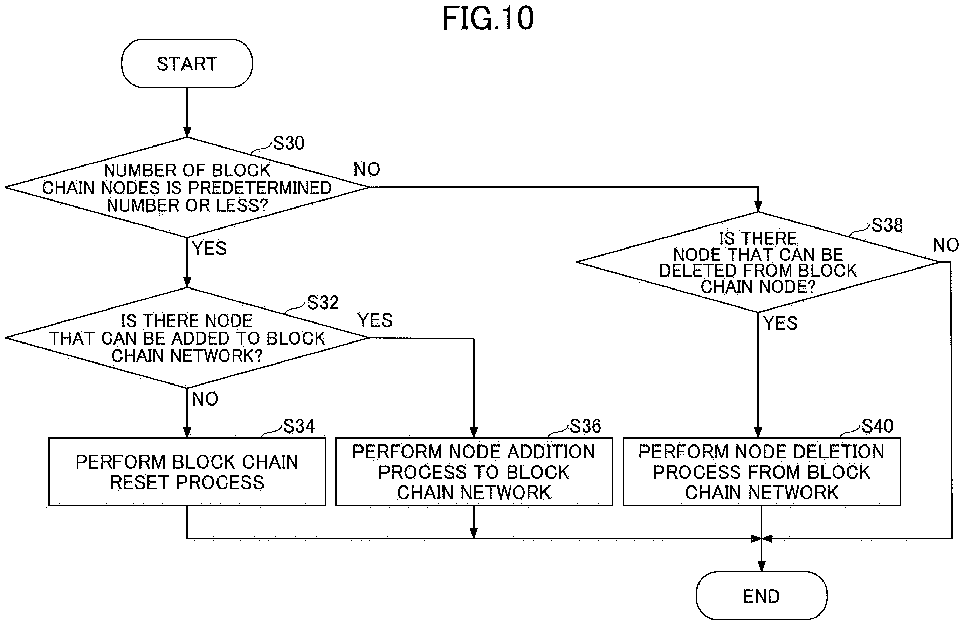

In step S16, the block chain node updating unit 28 determines an appropriate configuration of the block chain nodes and updates the block chain nodes based on the changed node information as described below with reference to FIG. 10. For example, in step S16, if the number of the block chain nodes and resources are insufficient to guarantee the security of the block chain, the number of the block chain nodes is increased, and if the security of the block chain is sufficiently guaranteed even when the number of the block chain nodes and resources are reduced, the number of the block chain nodes and resources are reduced.

For example, for a block chain node to be newly added to the block chain, for example, a block chain node that has a low communication cost may be selected preferentially, for example. Additionally, for a block chain node to be newly deleted from the block chain, for example, a block chain node that has a high communication cost may be selected preferentially, for example.

In step S18, the block chain network information managing unit 26 updates the block chain network information recorded in the block chain network information management DB 34 with a result of the block chain node updating process in step S16 and transmits the update to the block chain nodes.

The processing of step S14 and step S16 is performed, for example, as a flowchart illustrated in FIG. 10. FIG. 10 is a flowchart of an example of the block chain node updating process.

In step S30, the block chain node updating unit 28 determines whether the number of the block chain nodes is less than or equal to a predetermined number (the number of the block chain nodes sufficient to guarantee the security of the block chain).

If the number of the block chain nodes is less than or equal to the predetermined number, the block chain node updating unit 28 proceeds to step S32 and determines whether there is a node 14 or a GW 12 that can be added to the block chain network.

If there is no node 14 or GW 12 that can be added to the block chain network, the block chain node updating unit 28 proceeds to step S34 and resets the block chain because the security of the block chain cannot be guaranteed. The block chain reset process is a process of stopping recording to the block chain.

Here, the block chain reset process may set the recording to the block chain to be pending with a time limit, and may continue the recording to the block chain if the block chain node can be added to the block chain network before the time limit is reached. The block chain reset process may immediately abort the recording to the block chain and restart the recording to the block chain from a latest block.

If there is a node 14 or a GW 12 that can be added to the block chain network, the process proceeds from step S32 to step S36, and the block chain node updating unit 28 performs a process of adding the node to the block chain network. In the process of adding the node in step S36, based on the GW information of FIG. 6 and the node information of FIG. 7, a block chain node having a low communication cost and a high unused rate of the resource status is selected and added to the block chain.

If the number of the block chain nodes is not less than or equal to the predetermined number, the block chain node updating unit 28 proceeds from step S30 to step S38 and determines whether there is a block chain node that can be deleted from the block chain network with the security of the block chain being guaranteed.

If there is a block chain node that can be deleted from the block chain network with the security of the block chain being guaranteed, the block chain node updating unit 28 proceeds from step S38 to step S40 and performs a process of deleting the node from the block chain network. The process of deleting the node from the block chain network in step S40 is a process of preferentially deleting a block chain node having a high communication cost from the block chain within a range in which the security of the block chain can be guaranteed.

If there is no block chain node that can be deleted from the block chain network with the security of the block chain being guaranteed, the block chain node updating unit 28 skips the processing of step S40.

In the flowchart of FIG. 10, it is determined whether the number of block chain nodes is less than or equal to the predetermined number. However, determination based on other information may be used, such as determination based on the unused rates of the resource statuses of the block chain nodes.

Additionally, in the block chain system 1 according to the present embodiment, an example, in which the information related to the changed node 14 (e.g., addition, deletion, setting change of the node 14, and the like) is notified by the node 14, has been described. However, the cloud server 10 or the GW 12 may detect the changed information.

According to the block chain system 1 according to the present embodiment, the block chain network that can guarantee the security of the block chain is maintained by the block chain node updating process. Thus, even when the equipment of the property that may be added, deleted, or changed in the setting is used as the block chain node, the change in the information related to the node 14, which is the equipment of the property, can be recorded in the block chain with the security being guaranteed.

### [Second embodiment]

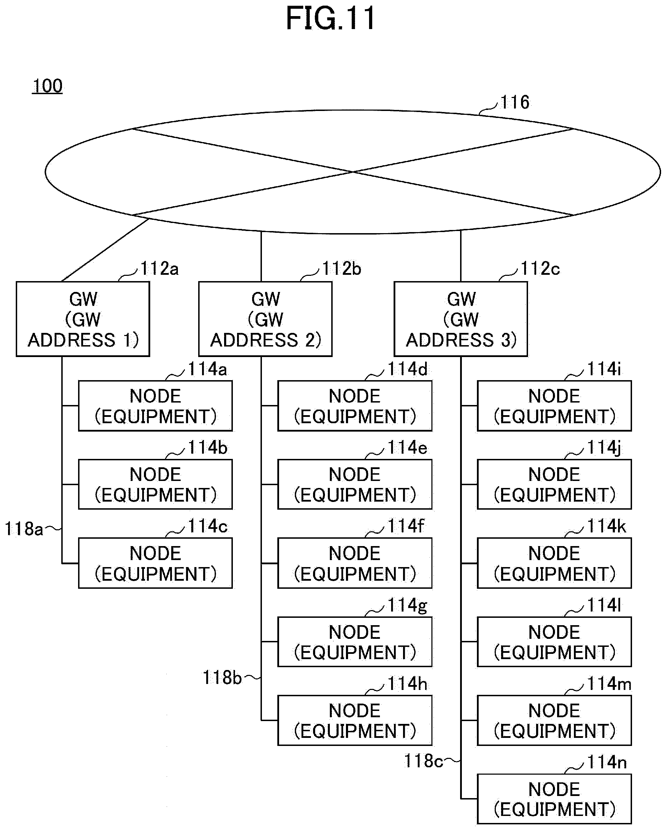

The block chain system 1 according to the first embodiment may be implemented in the configuration as illustrated in FIG. 11. FIG. 11 is a configuration diagram of another example of the block chain system according to the present embodiment. Here, a block chain system 100 illustrated in FIG. 11 is substantially the same as the block chain system 1 illustrated in FIG. 1 except for a part thereof, and thus the description thereof will be appropriately omitted.

In the block chain system 100, GWs 112a to 112c and nodes 114a to 114n are connected via networks 116 and 118a to 118c, such as the Internet and LANs. The block chain system 100 is configured such that the cloud server 10 of the block chain system 1 of FIG. 1 is omitted.

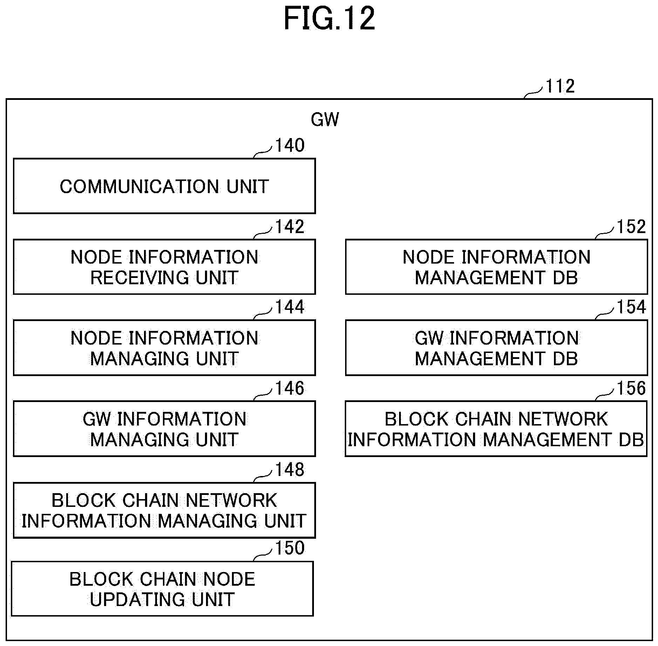

Among the functional blocks of the omitted cloud server 10, the functional blocks necessary for the block chain system 100 according to the second embodiment are provided in the GW 112, for example, as illustrated in FIG. 12.

FIG. 12 is a functional block diagram of an example of the GW according to the second embodiment. The GW 112 executes a program to implement a communication unit 140, a node information receiving unit 142, a node information managing unit 144, a GW information managing unit 146, a block chain network information managing unit 148, a block chain node updating unit 150, a node information management DB 152, a GW information management DB 154, and a block chain network information management DB 156.

The communication unit 140 communicates via the network 116 or the networks 118a to 118c. The node information receiving unit 142 receives node information (information related to the node 114) from the node 114.

The node information managing unit 144 manages the node information of FIG. 7 or FIG. 13. The GW information managing unit 146 manages the GW information of FIG. 6. The block chain network information managing unit 148 manages the block chain network information of FIG. 8 or FIG. 14. The block chain node updating unit 150 updates the block chain nodes included in the block chain network in substantially the same manner as the first embodiment. The node information management DB 152 records the node information of FIG. 7 or FIG. 13. The GW information management DB 154 records the GW information of FIG. 6. The block chain network information management DB 156 records the block chain network information of FIG. 8 or FIG. 14.

In the block chain system 100 according to the second embodiment, the block chain network information as illustrated in FIG. 8 or FIG. 14, which is managed by the GW 112, is transmitted to the block chain nodes.

The block chain node that receives the block chain network information can recognize other block chain nodes participating in the same block chain network by referring to the block chain network information illustrated in FIG. 8 or FIG. 14.

The GW 12 is provided, for example, for each property, in the block chain system 100. For example, in the block chain system 100 of FIG. 11, the GWs 112a to 112c may be provided for different properties. In this case, the networks 118a to 118c under the GWs 112a to 112c are closed networks within respective properties. The closed network 118 of each property is communicatively connected to the closed network 118 of another property via the GW 112.

Here, in the block chain system 100 according to the second embodiment, an initial block chain network may be configured by the block chain nodes of the closed network 118 for each GW 112, and when the number of the block chain nodes is less than or equal to a predetermined number, a process of adding the block chain node of another closed network 118 to the block chain network may be performed.

For example, the initial block chain network may be configured by the nodes 114a to 114c and the GW 112a of the closed network 118a of the GW 112a, and when the number of the block chain nodes is less than or equal to the predetermined number, a process of adding the nodes 114d to 114h and the GW 112b of another closed network 118b to the block chain network may be performed.

At the start of the operation of the block chain system 100, an administrator or the like sets the GW information of FIG. 6, the node information of FIG. 7 or 13, and the block chain network information of FIG. 8 or 13. The block chain system 100 according to the second embodiment starts to record the information related to the changed node 114 (e.g., addition, deletion, setting change of the node 114) by the block chain network, as in the first embodiment.

When the addition or the deletion of the node 114 to the closed network 118, or the setting change to the node 114 occurs after the recording performed by the block chain network is started, the node 114 notifies the GW 112 of the change in the node information.

When receiving the change of the node information from the node 114 in step S10, the communication unit 140 of the GW 112 transmits the node information to the node information managing unit 144. In step S12, the node information managing unit 144 that receives the change of the node information updates the node information recorded in the node information management DB 152 to reflect the change of the node information. When the GW information is changed due to the change of the node information, the GW information managing unit 146 updates the GW information recorded in the GW information management DB 154.

In step S14, the block chain node updating unit 150 determines whether the block chain node updating process is necessary.

When determining that the block chain node updating process is necessary, the block chain node updating unit 150 performs the processing from step S16. When determining that the block chain node updating process is not necessary, the block chain node updating unit 150 skips the processing from step S16.

In step S16, the block chain node updating unit 150 determines an appropriate configuration of the block chain nodes and updates the block chain nodes based on the changed node information, as described above with reference to FIG. 10.

In step S18, the block chain network information managing unit 148 updates the block chain network information recorded in the block chain network information management DB 156 with a result of the block chain node updating process in step S16, and transmits the update to the block chain nodes.

The processing of step S14 and step S16 is performed, for example, as the flowchart illustrated in FIG. 10. In step S30, the block chain node updating unit 150 determines whether the number of the block chain nodes is less than or equal to a predetermined number. If the number of the block chain nodes is less than or equal to the predetermined number, the block chain node updating unit 150 proceeds to step S32 and determines whether there is a node 114 or a GW 112 that can be added to the block chain network.

If there is no node 114 or GW 112 that can be added to the block chain network, the block chain node updating unit 150 proceeds to step S34 and resets the block chain because the security of the block chain cannot be guaranteed.

If there is a node 114 or a GW 112 that can be added to the block chain network, the process proceeds from step S32 to step S36, and the block chain node updating unit 150 performs the process of adding the node to the block chain network.

If the number of the block chain nodes is not less than or equal to the predetermined number, the block chain node updating unit 150 proceeds from step S30 to step S38 and determines whether there is a block chain node that can be deleted from the block chain network with the security of the block chain being guaranteed.

If there is a block chain node that can be deleted from the block chain network with the security of the block chain being guaranteed, the block chain node updating unit 150 proceeds from step S38 to step S40 and performs the process of deleting the node from the block chain network.

If there is no block chain node that can be deleted from the block chain network with the security of the block chain being guaranteed, the block chain node updating unit 150 skips the processing of step S40.

Additionally, although in the block chain system 100 according to the second embodiment, an example, in which the information related to the changed node 114 (e.g., addition, deletion, or setting change of the node 14) is notified by the node 114 itself, has been described, the GW 112 may detect the changed information.

In the block chain system 100 according to the second embodiment, the running cost of the cloud service can be reduced and the block chain network that can guarantee the security of the block chain can be maintained. Thus, even when the equipment of the property that may be added, deleted, or changed in setting is used as the block chain node, the change in information related to the node 114, which is the equipment of the property, can be recorded in the block chain with the security being guaranteed.

Additionally, the change in the information related to the node 114, which is the equipment of the property, is stored in the block chain without collectively storing the change in the cloud service, so that the risk of data loss and the security risk can be reduced.

Although the invention has been described according to the embodiments above, the invention is not limited to the above embodiments, and various modifications can be made within the scope of the claims. This application is based upon and claims the priority to Japanese Application No. 2019-213350, filed November 26, 2019, submitted to the Japan Patent Office, the entirety of which is incorporated herein by reference.

### Description of the Reference Numerals

1, 100 block chain system
10 cloud server
12a to 12c, 112a to 112c GW
14a to 14n, 114a to 114n node
16, 18a to 18c, 116, 118a to 118c network
20, 40, 60, 140 communication unit
22, 144 node information managing unit
24, 146 GW information managing unit
26, 148 block chain network information managing unit
28, 150 block chain node updating unit
30, 152 node information management DB
32, 154 GW information management DB
34, 156 block chain network information management DB
42, 142 node information receiving unit
44 node information transmitting unit
62 block chain network information receiving unit
64 block chain network information management DB
66 node information notifying unit
68 transaction processing unit
80 propagating unit
82 block generating unit
84 agreement determining unit
86 block recording unit
88 transaction generating unit

## Claims

1. A block chain system including a network connection apparatus communicatively connecting networks and a plurality of nodes connected to a network under the network connection apparatus, the block chain system comprising:
a node information managing unit configured to manage information related to the plurality of nodes connected to the network under the network connection apparatus;
a network connection apparatus information managing unit configured to manage information related to the network connection apparatus, the plurality of nodes being connected to the network under the network connection apparatus;
a block chain network information managing unit configured to manage information related to a block chain network in which block chain nodes include at least a part of the plurality of nodes and the network connection apparatus;
a block chain node updating unit configured to update the block chain nodes in response to a change in the information related to the plurality of nodes managed by the node information managing unit;
a propagating unit configured to propagate, to the block chain nodes, information that is input in the block chain network for recording; and
a recording unit configured to record the information that is input, in the block chain network, in a case where agreement is achieved in the block chain nodes with respect to the information that is input.

2. The block chain system as claimed in claim 1, wherein the block chain node updating unit performs addition to the block chain nodes by referring to the information related to the network connection apparatus managed by the network connection apparatus information managing unit, in a case where a number of the block chain nodes is less than or equal to a predetermined number by referring to the information related to the block chain network managed by the block chain network information managing unit.

3. The block chain system as claimed in claim 2, wherein the block chain node updating unit deletes a part of the block chain nodes from the block chain network, if the number of the block chain nodes is not less than or equal to a predetermined number by referring to the information related to the block chain network managed by the block chain network information managing unit in a case where the part of the block chain nodes is to be deleted.

4. The block chain system as claimed in claim 3, wherein the block chain node updating unit selects the node and the network connection apparatus to be added as the block chain nodes or to be deleted, based on resource statuses of the nodes connected to the network under the network connection apparatus and the network connection apparatus.

5. The block chain system as claimed in claim 4, wherein the block chain node updating unit further selects the node and the network connection apparatus to be added as the block chain nodes or to be deleted, in consideration of a communication cost.

6. The block chain system as claimed in any one of claims 1 to 5, wherein the nodes are equipment connected to the network under the network connection apparatus of a property.

7. A program causing a network connection apparatus communicatively connecting networks to function as an apparatus comprising:
a node information managing unit configured to manage information related to a plurality of nodes connected to a network under the network connection apparatus;
a network connection apparatus information managing unit configured to manage information related to another network connection apparatus, a plurality of nodes being connected to a network under the another network connection apparatus;
a block chain network information managing unit configured to manage information related to a block chain network in which block chain nodes includes at least a part of the nodes managed by the node information managing unit, the network connection apparatus, and the nodes managed by the network connection apparatus information managing unit; and
a block chain node updating unit configured to update the block chain nodes in response to a change in the information related to the plurality of nodes managed by the node information managing unit.

8. A network connection apparatus communicatively connecting networks, the network connection apparatus comprising:
a node information managing unit configured to manage information related to a plurality of nodes connected to a network under the network connection apparatus;
a network connection apparatus information managing unit configured to manage information related to another network connection apparatus, a plurality of nodes being connected to a network under the another network connection apparatus;
a block chain network information managing unit configured to manage information related to a block chain network in which block chain nodes include at least a part of the nodes managed by the node information managing unit, the network connection apparatus, and the nodes managed by the network connection apparatus information managing unit; and
a block chain node updating unit configured to update the block chain nodes in response to a change in the information related to the plurality of nodes managed by the node information managing unit.
